# EUROPEAN PATENT SPECIFICATION

(11) **EP 1 705 435 B1**
(45) Date of publication and mention of the grant of the patent: **10.12.2008**
(21) Application number: 06003628.2
(22) Date of filing: 22.02.2006
(51) Int. Cl.: F25B 41/06

(54) **Constant flow rate expansion valve**
Entspannungsventil mit konstantem Durchfluss
Vanne de détente à débit constant

(30) Priority: 01.03.2005 JP 2005055555
(43) Date of publication of application: 27.09.2006
(73) Proprietor: TGK COMPANY, LTD., Tokyo 193-0942 (JP)
(72) Inventor: Hirota, Hisatoshi, Hachioji-shi Tokyo 193-0942 (JP)
(74) Representative: Grünecker, Kinkeldey, Stockmair & Schwanhäusser Anwaltssozietät

(56) References cited:
- EP-A2- 1 357 339
- EP-A2- 1 394 646
- JP-A- 2001 153 495
- JP-A- 2004 053 192

## Description

The invention relates to a constant flow rate expansion valve, according to the preamble of claim 1, particularly for a refrigeration cycle for an automotive air conditioner. The expansion valve adiabatically expands high-temperature, high-pressure refrigerant into low-temperature, low-pressure refrigerant to supply an evaporator at a constant flow rate.

Known refrigeration cycles for automotive air conditioner comprise a compressor, a condenser or a gas cooler, an expansion valve, an evaporator, and an accumulator. The compressor and the expansion valve control the flow rate. In a variable displacement compressor an electronic control valve performs differential pressure control such that the difference between discharge pressure and suction pressure of the compressor becomes constant irrespective of the flow rate. In this case, a constant flow rate expansion valve that controls a constant flow rate irrespective of the differential pressure across the expansion valve is employed so as to avoid contention between the differential pressure control of the electronic control valve of the variable displacement compressor and the control action of the expansion valve.

An expansion valve known from JP-2001-153495, Fig 1 comprises a solenoid for changing a flow passage cross-sectional area of a refrigerant passage where refrigerant is adiabatically expanded, and a constant differential pressure valve that keeps the differential pressure across the refrigerant passage constant of which the cross-sectional area is set by the solenoid. Therefore, the constant differential pressure valve controls the differential pressure across the refrigerant passage of which the flow passage cross-sectional area is determined by the solenoid such that the differential pressure is held constant, and therefore the flow rate of refrigerant flowing through the refrigerant passage is controlled to be constant. The flow rate can be freely set by the value of electric current supplied to the solenoid. The differential pressure valve includes a piston fort sensing at opposite ends the differential pressure across the refrigerant passage. The piston moves in valve-opening or valve-closing directions according to the differential pressure.

Another constant flow rate expansion valve known from JP-2004-53192A, Fig 1, has improved degradation of characteristics due to only small leakage of refrigerant through a sliding portion of a piston. A main valve and a restriction device interlocked with a solenoid are arranged in series in flow direction. In parallel therewith, a piston actuating a main valve element, having a fixed orifice, a pressure chamber, and a pilot valve forming a variable orifice are arranged in series together with the solenoid. Since the sliding portion of the piston faces the pressure chamber, refrigerant leaking through the sliding portion leaks into the pressure chamber. The leaked-through refrigerant and refrigerant discharged from the pressure chamber commonly are controlled by the pilot valve, whereby it is possible to substantially eliminate the influence of the leakage occurring at the sliding portion of the piston. When the solenoid controls a valve lift at the pilot valve dependent on the value of supplied electric current, the pressure chamber contains pressure corresponding to the size of the variable orifice of the pilot valve. The piston controls the main valve to a valve lift dependent on the differential pressure between the pressure in the pressure chamber and pressure in an inlet port so that refrigerant flows through the main valve and the restriction device at a predetermined flow rate. When the flow rate increases, the differential pressure across the restriction device interlocked with the solenoid increases, and therefore the differential pressure controls the pilot valve in a direction of decreasing the variable orifice. The pressure in the pressure chamber on the upstream side increases in proportion to the decrease of the variable orifice, and the piston to reduces the flow rate by controlling the main valve in valve-closing direction. Inversely, when the flow rate decreases, the main valve moves in valve-opening direction and increases the flow rate. The flow rate through the expansion valve is a constant flow rate determined by the solenoid force.

When the known expansion valve controls the pressure chamber pressure by the pilot valve which is disposed on the outlet port side, the pilot valve element receives the differential pressure between the outlet pressure and the pressure chamber pressure in valve-opening direction. However, the value of the pressure in the pressure chamber is close to the value of the inlet pressure, and hence the differential pressure applied to the pilot valve element becomes very large and causes disturbances for the pilot valve which has to operate by sensing the flow rate through the restriction device, and hence it would be desirable to eliminate this influence of the differential pressure. In this case, it is contemplated that a mechanism for canceling the influence of the differential pressure could be added to the pilot valve. However, this added mechanism would make the construction of the constant flow rate expansion valve very complicated, and therefore instead the pressure-receiving area of the variable orifice is made smaller to thereby lessen the degree of the influence of the differential pressure on the pilot valve. However, there is a limit for decreasing the pressure-receiving area, and the degree of influence of the differential pressure in the valve-opening direction remains large against a force which the pilot valve causes to act on the valve element in valve-closing direction, by sensing the flow rate. This makes the differential pressure unnegligible and causes the problem that the pilot valve tends to act as if it were a constant differential pressure valve.

It is an object of the invention to provide a constant flow rate expansion valve within which the influence of the differential pressure on the pilot valve can be reduced by a marked degree.

This object is achieved by the features of claim 1.

In the constant flow rate expansion valve the differential pressure applied to the pilot valve can be decreased to the same level as that of small differential pressure applied to the opposite end faces of the piston. This makes it substantially possible to dispense with an add-up mechanism for canceling the influence of the differential pressure, and enhances the control performance accuracy.

Embodiments of the invention will be explained with the help of the drawings. In the drawing is:
- Fig. 1 is: a cross-section of a first embodiment of a constant flow rate expansion valve, in a closed state;
- Fig. 2 is: a cross-section of the constant flow rate expansion valve in an open state,
- Fig. 3A is: a cross-section of essential parts of a conventional constant flow rate expansion valve,
- Fig. 3B is: a cross-section of essential parts of the constant flow rate expansion valve of Figs. 1 and 2, according to the invention,
- Fig. 4 is: a cross-section of a second embodiment of the constant flow rate expansion valve,
- Fig. 5 is: a cross-section of a third embodiment of the constant flow rate expansion valve, and
- Fig. 6 is: a cross-section along line A-A in FIG. 5.

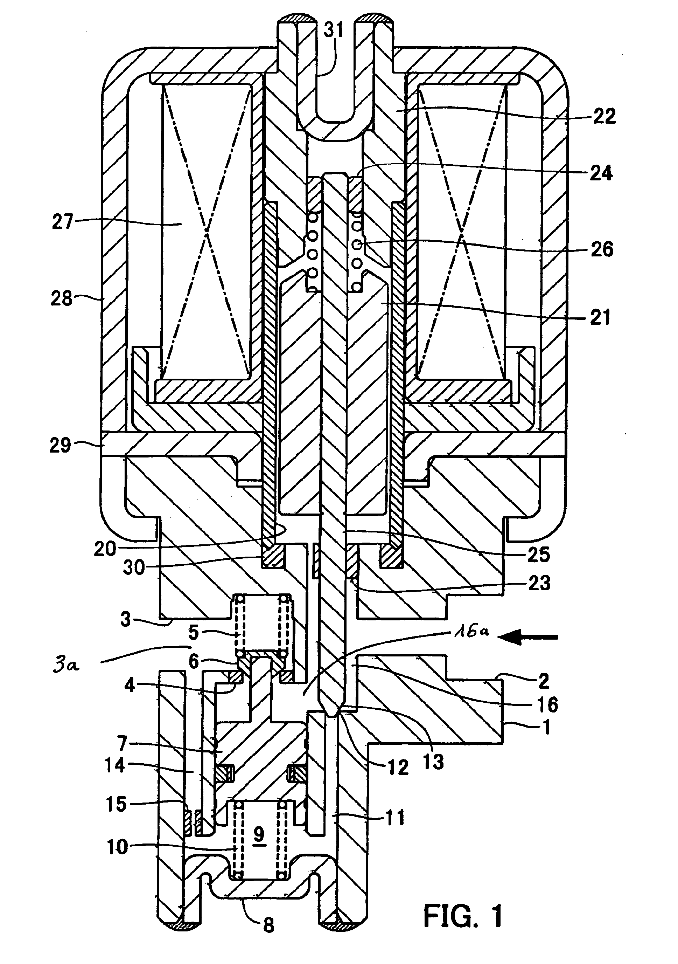

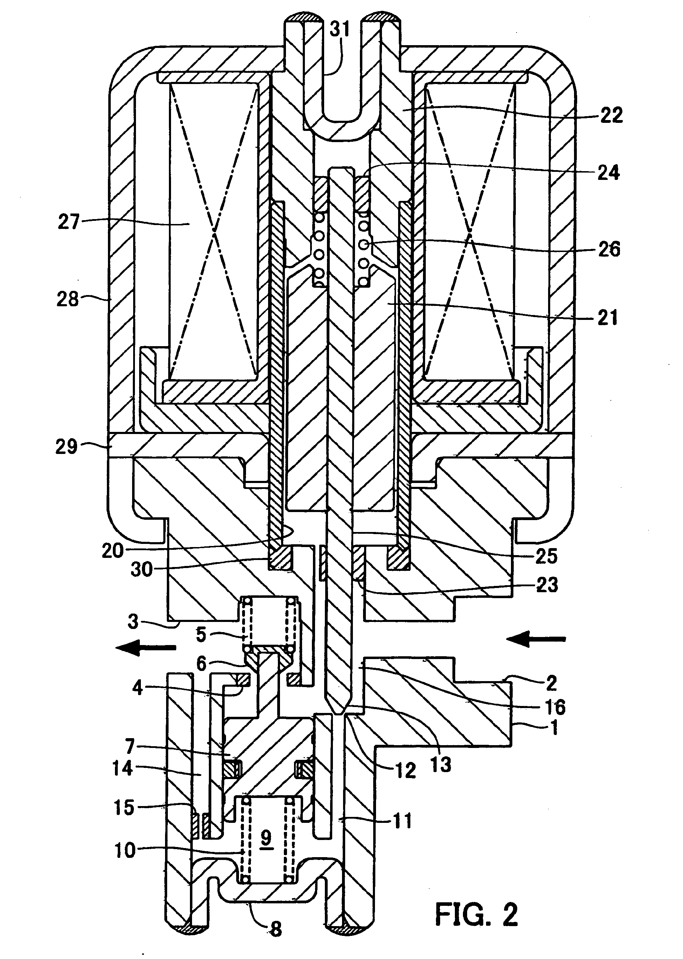

The constant flow rate expansion valve of Figs 1 and 2 has a body 1, an inlet port 2 for high-pressure refrigerant, and an outlet port 3 for low-pressure refrigerant (discharged toward an evaporator). A main valve seat 4 is press-fitted into an intermediate portion of a refrigerant passage between the inlet and outlet ports 2, 3. A main valve element 6 urged in valve-closing direction by a spring 5 is disposed opposed to the main valve seat 4 on the downstream side. The main value element 6 and the main valve seat 4 form a main valve. Upstream of the main valve, a piston 7 is coaxially movably disposed within a cylinder hole in the body 1. The piston 7 is connected to the main valve element 6 by a shaft extending through a valve hole of the main valve. A pressure chamber 9 is formed below the piston 7 by closing an opening of the body 1 with a press-fitted member 8. A spring 10 disposed between the piston 7 and the press-fitted member 8 urges the piston 7 in valve-opening direction of the main valve. The load of the spring 10 is adjusted by the press-fit-depth of the press-fitted member 8. After adjustment of the load, the lower end of the press-fitted member 8 is welded to the body 1 to hermetically seal the pressure chamber 9.

The pressure chamber 9 communicates with a chamber 16a communicating with the upstream side of the main valve via a pilot passage 11 in the body 1. An opening of the pilot passage 11 in the chamber 16a forms a pilot valve seat 12. A needle-shaped pilot valve element 13 is disposed opposed to the pilot valve seat 12 at the upstream side. The pilot valve 12, 13 functions as a variable orifice. The pressure chamber 9 also communicates via a refrigerant passage 14 in the body 1 with the downstream side of the main valve, that is, with a chamber 3a at the outlet port 3. A member 15 functioning as a fixed orifice is press-fitted into the refrigerant passage 14. Instead of a separate orifice-forming member 15 the refrigerant passage 14 could be made with an inner diameter small enough to define a fixed orifice.

The pilot valve element 13 is disposed in a passage between the inlet of the pilot valve and the inlet port 2, such that a restriction passage 16 is formed for restricting the flow rate from the inlet port 2. The restriction passage 16 thus generates a differential pressure between the inlet port 2 and the inlet of the pilot valve, in order to generate a force urging the pilot valve element 13 in valve-closing direction. The restriction passage 16 fulfils the function of controlling the pilot valve by sensing the flow rate.

A solenoid on the top of the body 1 comprises a sleeve 20 fitted into an upper portion of the body 1, a plunger 21 axially movably disposed in the sleeve 20, a hollow core 22 fitted into an upper end of the sleeve 20, and a shaft 25 fixedly disposed in the plunger 21. A lower portion of the shaft 25 is supported by a bearing 23 press-fitted into the body 1. An upper end of the shaft 25 is supported by a bearing 24 press-fitted into an axial hole formed through the core 22. A spring 26 is disposed between the plunger 21 and the bearing 24, for urging the pilot valve element 13 via the shaft 25 in valve-closing direction. A coil 27 surrounds the sleeve 20. A yoke 28 surrounds the outside of the coil 27. A plate 29 disposed between the yoke 28 and the sleeve 20 closes a magnetic circuit.

An annular packing 30 is disposed in the bottom of the hole formed in the top of the body 1. When the sleeve 20 is fitted in the hole, the annular packing 30 is press-fitted in the bottom by the foremost end of the sleeve 20 formed with an acute angle. This provides a reliable sealing function. The upper open end of the core 22 is hermetically closed by a press-fitted and welded-in member 31.

The shaft 25 is integral with the pilot valve element 13. The pilot passage 11, a hole containing the bearing 23, and the hole for the sleeve 20 are formed along the same axis in the body 1. Thus, the pilot passage 11 and the holes are substantially coaxial, and the pilot valve element 13 formed integral at the foremost end of the shaft 25 as an additional component will permanently be guided axially in relation to the pilot valve seat 12 which also substantially is coaxial with the pilot valve element 13.

The load of the spring 26 between the plunger 21 and the bearing 24 is adjusted by selecting the press-fitting-depth insertion of the bearing 24 in the core 22. The solenoid is secured to the body 1 by swaging the lower end of the yoke 28 to a flange on the top of the body 1.

Without refrigerant at the inlet port 2, and the coil 27 deenergized, the main valve is fully open, since the spring 10 urging the piston 7 is stronger than the spring 5. The pilot valve is fully closed, since the pilot valve element 13 is seated by the spring 26 on the pilot valve seat 12. In the above state, when refrigerant is introduced into the inlet port 2, the refrigerant enters via the restriction passage 16 the chamber 16a above the piston 7. The pressure-receiving area of the main valve element 6 is smaller than the pressure-receiving area of the piston 7, and the pressure chamber 9 pressure is low since the pressure chamber 9 communicates with the outlet port 3 via the member 15. The piston 7 is pressed downward by high refrigerant pressure overcoming the urging force of the spring 10. The main valve will be fully closed, (Fig. 1). Thus, the constant flow rate expansion valve is fully closed.

Now, when proper control current is supplied to the coil 27, the plunger 21 is attracted by the core 22. The pilot valve element 13 stops at a location where the attractive force of the plunger 21 and the load of the spring 26 are balanced. So the pilot valve is set to a certain opening lift amount. High-pressure refrigerant enters the pressure chamber 9 below the piston 7 via the pilot valve having the orifice size set by the solenoid and the pilot passage 11, and refrigerant flows through the member 15 to the outlet port 3 at a constant flow rate smaller than the flow rate introduced into the pressure chamber 9. The pressure chamber 9 becomes pressurized to a certain value. As a result, the piston 7 moves to a position where the differential pressure between the pressure in the chamber above the piston 7 and the pressure chamber 9 pressure below the piston 7 and the loads of the springs 5 and 10 are balanced. The main valve element 6 connected to the piston 7 also is moved away from the main valve seat 4 by the amount of the movement of the piston 7. The main valve becomes opened (Fig. 2), allowing refrigerant to flow through at a predetermined flow rate dependent on the value of control current. At this time, an urging force in valve-closing direction is caused to act on the pilot valve element 13 by differential pressure across the restriction passage 16 according to the flow rate of refrigerant flowing through the restriction passage 16.

In this state, when the flow rate changes, the differential pressure across the restriction passage 16 changes, and accordingly the lift amount of the pilot valve changes. As a result, the pressure chamber 9 pressure on the downstream side of the pilot valve changes to change the lift amount of the main valve. For example, when the flow rate increases, the pilot valve element 13 is urged in valve-closing direction due to an increase in the differential pressure across the restriction passage 16. Consequently, the pressure chamber 9 pressure lowers to move the piston 7 downward in Fig. 2, i.e. the main valve moves in valve-closing direction and decreases the flow rate through the main valve. Inversely, when the flow rate decreases, the differential pressure across the restriction passage 16 lowers, which increases the variable orifice of the pilot valve to increase the pressure chamber 9 pressure, whereby the main valve moves in valve-opening direction, to increase the flow rate. Thus, refrigerant is discharged from the constant flow rate expansion valve at a constant flow rate maintained according to the value of the control current.

When the value of the control current is changed from the above state in which the flow rate of refrigerant discharged from the constant flow rate expansion valve is maintained constant, the variable orifice of the pilot valve changes to change the pressure chamber 9 pressure on the downstream side of the pilot valve, whereby the lift amount of the main valve changes. For example, when the value of the control current is increased, the variable orifice is made larger, so that the pressure chamber 9 pressure increases to decrease differential pressure applied to the opposite end faces of the piston 7, so that the piston 7 moves upward in Fig. 2. The main valve will become set to a lift position for a larger flow rate. Inversely, when the value of the control current is reduced, the variable orifice is made smaller, so that the pressure chamber 9 pressure decreases to increase the differential pressure applied to the opposite end faces of the piston 7, so that the piston 7 moves downward in Fig. 2, whereby the main valve is set to a lift position for a smaller flow rate.

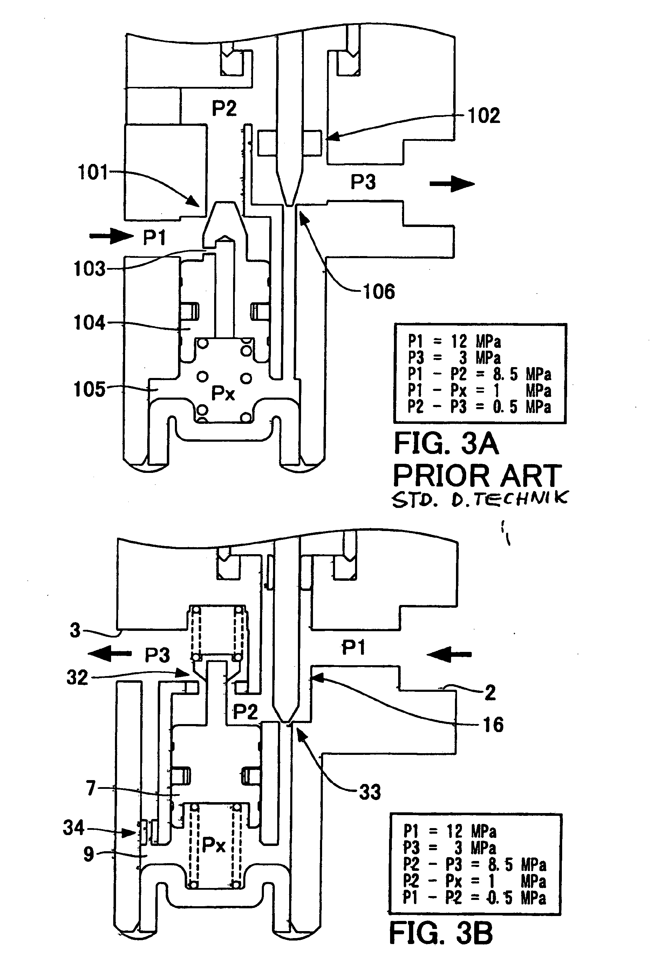

The structural characteristics of the constant flow rate expansion valve according to the invention will be described referring to Figs. 3A, 3B compared with the conventional constant flow rate expansion valve of JP-2004-53192A.

In Fig. 3A, in the conventional constant flow rate expansion valve a main valve 101 and a restriction device 102 interlocked with a solenoid are arranged in series in the flow direction. In parallel therewith, a piston 104 actuating a main valve element, having a fixed orifice 103, a pressure chamber 105, and a pilot valve 106 forming a variable orifice by the solenoid force, are arranged in series in the flow direction. In contrast, in Fig. 3B, in the constant flow rate expansion valve according to the present invention the restriction passage 16 and the main valve 32 are arranged between the inlet port 2 and the outlet port 3 in series in the flow direction. In parallel with the main valve 32, the pilot valve 33, the pressure chamber 9, and a fixed orifice 34 are arranged in series in the flow direction.

In Figs. 3A and 3B, inlet pressure is P1, intermediate pressure is P2, outlet pressure is P3, and the pressure chambers 105 and 9 pressures are Px. Now, let it be assumed that the inlet pressure P1 and the outlet pressure P3 are 12 MPa and 3 MPa, respectively, and the differential pressure across the main valves 101 and 32 is 8.5 MPa, the differential pressure applied to the opposite ends of the pistons 104 and 7 is 1 MPa, and the differential pressure across the restriction device 102 and the restriction passage 16 is 0.5 MPa, by way of example.

Here, when attention is paid to pressures applied to the pilot valves 106 and 33, it is understood that in the conventional constant flow rate expansion valve in Fig. 3A, the differential pressure (Px - P3) is 8 MPa since the pressure chamber 105 pressure is 11 MPa, whereas in the constant flow rate expansion valve according to the present invention in Fig. 3B, the differential pressure (P2 - Px) is only 1 MPa since the pressure chamber 9 pressure is 10.5 MPa. This means that if the other pressure conditions will be the same, it is possible to largely reduce the degree of the influence of the differential pressure on the pilot valve 33 in Fig. 3B compared to Fig. 3A. As already described, the differential pressure causes a disturbance for the pilot valve that has to operate by sensing the flow rate by the restriction device 102 or the restriction passage 16, and therefore it is desirable that the differential pressure is minimized. The constant flow rate expansion valve according to the present invention makes it possible to sufficiently lower the differential pressure without providing a particular added-up mechanism for canceling the influence of the differential pressure.

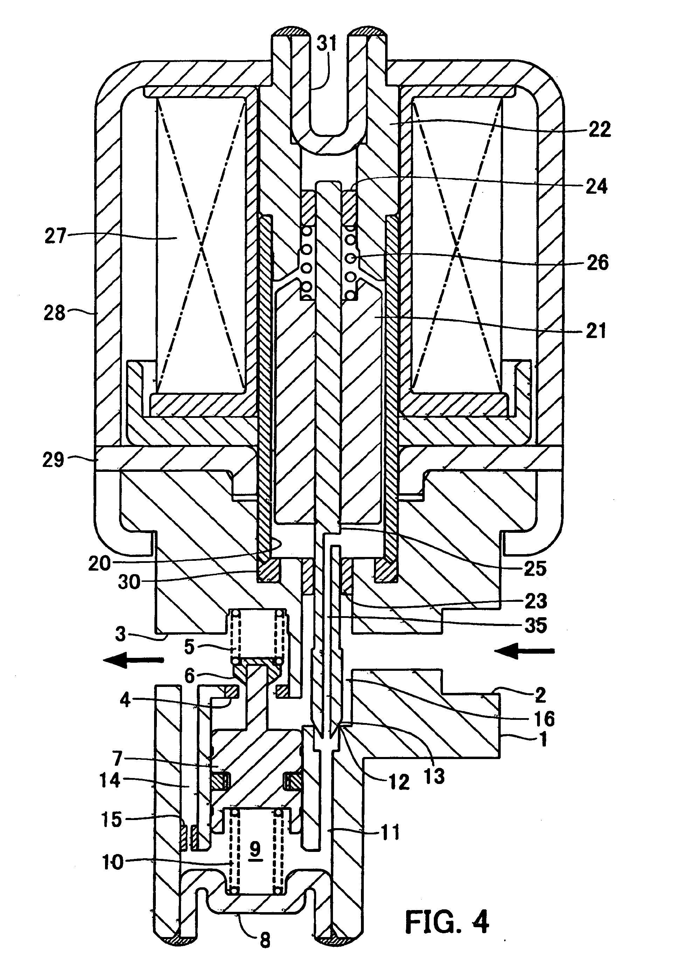

The constant flow rate expansion valve in Fig. 4 has additional means for canceling the influence of the differential pressure applied to the pilot valve. More specifically, a clearance of the bearing 23 axially movably supporting the shaft 25 of the solenoid is set to be sufficiently small, whereby the interior of the solenoid is sufficiently hermetically closed. Further, an axial pressure-equalizing hole 35 is disposed in the center of the shaft 25 and the pilot valve element 13 such that the pilot passage 11 communicating with the pressure chamber 9 and the otherwise hermetically closed interior of the solenoid communicate with each other.

The interior pressure of the solenoid is substantially equal to the pressure chamber 9 pressure, so that pressure chamber 9 pressure is applied to the pilot valve element 13 in valve-opening direction. The same pressure is applied to an end face of the shaft 25 formed integrally with the pilot valve 13 in valve-closing direction, such that an axial influence of the differential pressure is canceled, so that the pilot valve is operated only by the differential pressure across the restriction passage 16 in proportion to the flow rate.

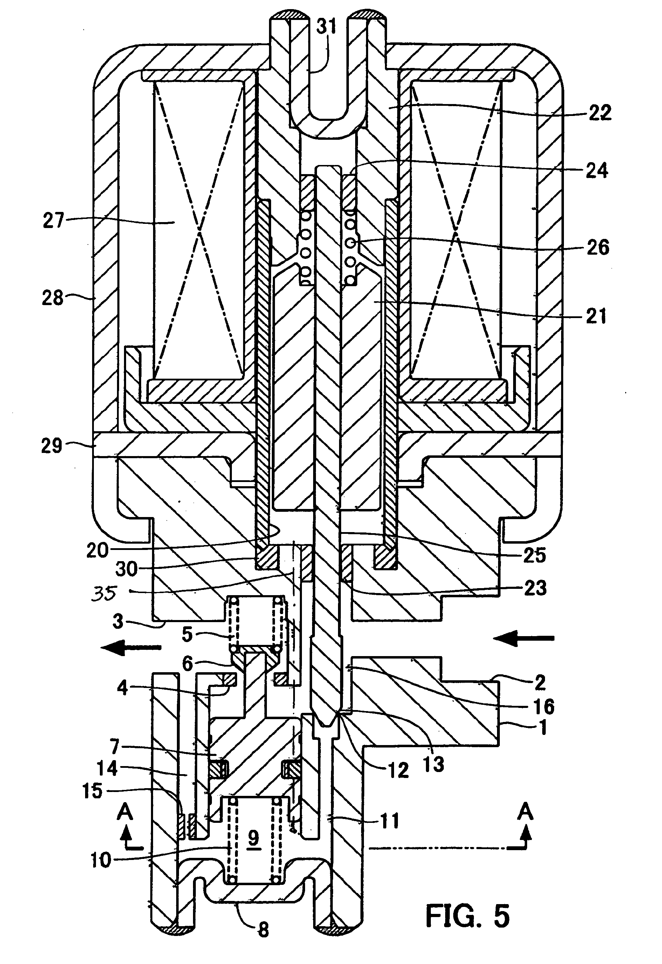

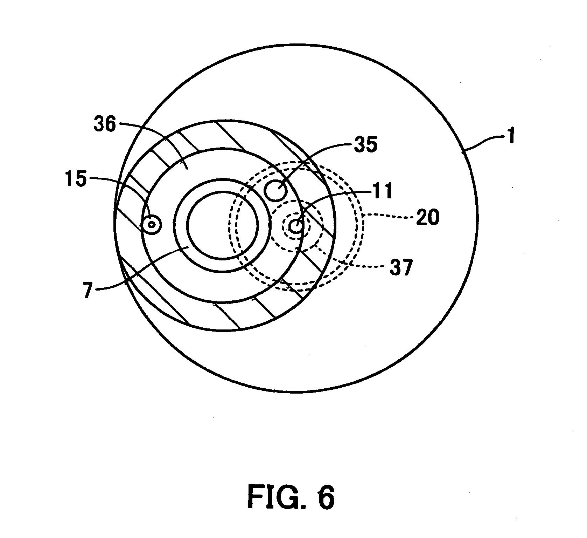

In the constant flow rate expansion valve in Figs. 5 and 6 the pressure-equalizing hole 35 is formed in the body 1, as only shown in Fig. 6. A cylinder wall 36 within which the piston 7 is disposed, partially overlaps in Fig. 6 the inside of a hole formed in the top of the body 1 for the sleeve 20, as viewed in the direction of the axis of the solenoid. The pressure-equalizing hole 35 is formed such that it extends through the cylinder wall 36 in the overlapping area at a location avoiding to in intersect a bearing-mounting hole 37 for the bearing 23.

As a result, the interior pressure of the solenoid remains approximately equal to the pressure chamber 9 pressure by the pressure-equalizing hole 35, so that the axial influence of the differential pressure on the pilot valve element 13 is cancelled. The pilot valve truly senses only the flow rate through the restriction passage 16 for variably controlling the variable orifice.

## Claims

1. A constant flow rate expansion valve including a main valve (32;4,6) for controlling a refrigerant flow rate, a piston (7) actuating the main valve in valve-opening/closing directions by differential pressure between pressure on an upstream side of the main valve and a pressure in a pressure chamber (9) formed on a side opposite to the main valve, and a pilot valve (33;12,13) controlled such that the pressure chamber (9) pressure is set by a solenoid, and becomes constant by sensing flow rate variations, **characterised in that** a restriction passage (16) is formed by disposing in a passage between an inlet of the pilot valve (33; 12, 13) and an inlet port (2) a pilot valve element (13) for restricting the flow rate from the inlet port (2) for generating a differential pressure which is proportional to the flow rate through the restriction passage (16) so as to control the pilot valve (33;12,13) by the differential pressure, that the restriction passage (16) and the main valve (32;4,6) are arranged in series in flow direction between the inlet port (2) and an outlet port (3), and that the pilot valve (33;12,13), the pressure chamber (9), and a fixed orifice (34;15) are arranged in parallel with the main valve (32;4,6) and in series in the flow direction.

2. The constant flow rate expansion valve according to claim 1, **characterised in that** the main valve (32;4,6) has a main valve element (8) disposed on an output port side of a main valve seat (4), that the piston (7) is coaxially slidably disposed between the main valve seat (4) and the pressure chamber (9), that the piston (7) is connected to a main valve seat penetrating shaft that is integrally connected to the main valve element (6), and that the piston (7) is urged in valve-opening direction of the main valve (32;4,6).

3. The constant flow rate expansion valve according to claim 1, **characterised by** differential pressure-cancelling means for cancelling differential pressure which is applied to the pilot valve (33;12,13) and which is the differential pressure between a pressure in the inlet port (2) and the pressure chamber (9) pressure.

4. The constant flow rate expansion valve according to claim 3, **characterised in that** the differential pressure-cancelling means is an axial pressure-equalizing hole (35) formed in the valve element (13) of the pilot valve, that the valve element (13) is integral with a shaft (25) of the solenoid, and that the pressure-equalizing hole (35) has one open end in a pilot passage (11) communicating with the pressure chamber (9), and has an other open end in a hermetically closed interior of the solenoid.

5. The constant flow rate expansion valve according to claim 3, **characterised in that** the differential pressure-cancelling means is a pressure-equalizing hole (35) extending, preferably within a body (1) of the expansion valve, between a hermetically closed interior of the solenoid and the pressure chamber (9).

## Patentansprüche

1. Konstantströmungsraten-Expansionsventil mit einem Hauptventil (32; 4, 6) zum Steuern einer Kältemittel-Strömungsrate, einem das Hauptventil in Ventilöffnungs/Schließrichtungen durch Differenzialdruck zwischen einem Druck an einer Stromaufseite des Hauptventils und einem Druck in einer an einer vom Hauptventil abgewandten Seite gebildeten Druckkammer (9) betätigenden Kolben (7), und einem Pilotventil (33; 12, 13), das so gesteuert wird, dass der durch einen Magneten eingestellte Druck in der Druckkammer (9) durch Abgreifen von Strömungsraten-Variationen konstant wird, **dadurch gekennzeichnet, dass** durch Anordnen eines Pilotventilelements (13) in einer Passage zwischen einem Einlass des Pilotventils (33; 12, 13) und einem Einlassanschluss (2) eine Drosselpassage (16) geformt ist, dass zum Beschränken der Strömungsrate von dem Einlassanschluss (2) zum Generieren eines Differenzialdrucks, der zur Strömungsrate durch die Drosselpassage (16) proportional ist, um durch den Differenzialdruck das Pilotventil (33; 12, 13) zu steuern, dass die Drosselpassage (16) und das Hauptventil (32; 4, 6) in Strömungsrichtung zwischen dem Einlassanschluss (2) und einem Auslassanschluss (3) in Reihe angeordnet sind, und dass das Pilotventil (33; 12, 13), die Druckkammer (9) und eine feste Blende (34; 15) in der Strömungsrichtung in Reihe und parallel mit dem Hauptventil (32; 4, 6) angeordnet sind.

2. Konstantströmungsraten-Expansionsventil gemäß Anspruch 1, **dadurch gekennzeichnet, dass** das Hauptventil (32; 4, 6) ein Hauptventilelement (8) aufweist, das an einer Auslassanschlussseite eines Hauptventilsitzes (4) angeordnet ist, dass der Kolben (7) zwischen dem Hauptventilsitz (4) und der Druckkammer (9) koaxial verschiebbar angeordnet ist, dass der Kolben (7) mit einem einen Hauptventilsitz durchdringenden Schaft verbunden ist, welcher mit dem Hauptventilelement (6) integral verbunden ist, und dass der Kolben (7) in Ventilöffnungsrichtung des Hauptventils (32; 4, 6) vorgespannt ist.

3. Konstantströmungsraten-Expansionsventil gemäß Anspruch 1, **gekennzeichnet durch** Differenzialdruck-Aufhebungsmittel zum Aufheben eines Differenzialdrucks, der auf das Pilotventil (33; 12, 13) appliziert wird, und der der Differenzialdruck zwischen einem Druck in dem Einlassanschluss (2) und dem Druck in der Druckkammer (9) ist.

4. Konstantströmungsraten-Expansionsventil gemäß Anspruch 3, **dadurch gekennzeichnet, dass** die Differenzialdruck-Aufhebungsmittel von einer axialen, druckausgleichenden Öffnung (35) gebildet werden, die in dem Pilotventilelement (13) des Pilotventils ausgebildet ist, dass das Pilotventilelement (13) mit einem Schaft (25) des Magneten integral ist, und dass die druckausgleichende Öffnung (35) in einer Pilotpassage (11) ein offenes Ende aufweist, welche Pilotpassage (11) mit der Druckkammer (9) kommuniziert, und ein anderes offenes Ende aufweist, das sich in einem hermetisch abgeschlossenen Inneren des Magneten befindet.

5. Konstantströmungsraten-Expansionsventil gemäß Anspruch 3, **dadurch gekennzeichnet, dass** die Differenzialdruck-Aufhebungsmittel eine druckausgleichende Öffnung (35) umfassen, die sich, vorzugsweise, innerhalb eines Körpers (1) des Expansionsventils zwischen einem hermetisch abgeschlossenen Inneren des Magneten und der Druckkammer (9) erstreckt.

## Revendications

1. Vanne de détente à débit constant incluant une vanne principale (32 ; 4,6) destinée à commander un débit de réfrigérant, un piston (7) actionnant la vanne principale suivant des directions d'ouverture/fermeture de vanne sous l'effet d'une pression différentielle entre la pression sur un côté en amont de la vanne principale et une pression dans une chambre de compression (9) formée sur un côté opposé à la vanne principale, et une vanne pilote (33 ; 12, 13) commandée de telle manière que la pression de la chambre de compression (9) est fixée par une électrovanne, et devient constante en détectant les variations du débit, **caractérisée en ce qu'**un passage de restriction (16) est formé en disposant, dans un passage entre une entrée de la vanne pilote (33 ; 12, 13) et un orifice d'entrée (2), un élément de vanne pilote (13) destiné à restreindre le débit issu de l'orifice d'entrée (2) afin de générer une pression différentielle qui est proportionnelle au débit traversant le passage de restriction (16) de manière à commander la vanne pilote (33 ; 12, 13) par la pression différentielle, **en ce que** le passage de restriction (16) et la vanne principale (32 ; 4,6) sont agencés en série suivant une direction d'écoulement entre l'orifice d'entrée (2) et un orifice de sortie (3), et **en ce que** la vanne pilote (33 ; 12, 13), la chambre de compression (9) et un orifice fixe (34 ; 15) sont agencés en parallèle avec la vanne principale (32 ; 4,6) et en série suivant la direction d'écoulement.

2. Vanne de détente à débit constant selon la revendication 1, **caractérisée en ce que** la vanne principale (32 ; 4,6) comporte un élément de vanne principale (8) disposé sur un côté d'orifice de sortie d'un siège de vanne principale (4), **en ce que** le piston (7) est disposé coaxialement de manière coulissante entre le siège de vanne principale (4) et la chambre de compression (9), **en ce que** le piston (7) est raccordé à un arbre pénétrant le siège de vanne principale et qui est raccordé d'un seul tenant à l'élément de vanne principale (6), et **en ce que** le piston (7) est poussé suivant la direction d'ouverture de vanne de la vanne principale (32 ; 4,6).

3. Vanne de détente à débit constant selon la revendication 1, **caractérisée par** des moyens de suppression de pression différentielle destinés à supprimer une pression différentielle qui est appliquée à la vanne pilote (33 ; 12, 13) et qui est la pression différentielle entre une pression dans l'orifice d'entrée (2) et la pression de la chambre de compression (9).

4. Vanne de détente à débit constant selon la revendication 3, **caractérisée en ce que** les moyens de suppression de pression différentielle sont un trou axial d'égalisation de pression (35) formé dans l'élément de vanne (13) de la vanne pilote, **en ce que** l'élément de vanne (13) est constitué d'un seul tenant avec un arbre (25) de l'électrovanne, et **en ce que** le trou d'égalisation de pression (35) comporte une extrémité ouverte dans un passage de pilote (11) communiquant avec la chambre de compression (9), et comporte une autre extrémité ouverte dans un espace intérieur hermétiquement fermé de l'électrovanne.

5. Vanne de détente à débit constant selon la revendication 3, **caractérisée en ce que** les moyens de suppression de pression différentielle sont un trou d'égalisation de pression (35) s'étendant, de préférence au sein d'un corps (1) de la vanne de détente, entre un espace intérieur hermétiquement fermé de l'électrovanne et la chambre de compression (9).
